# FASCICULE DE BREVET EUROPEEN

(11) **EP 4 617 047 B1**
(45) Date de publication et mention de la délivrance du brevet: **11.02.2026**
(21) Numéro de dépôt: 25152125.8
(22) Date de dépôt: 15.01.2025
(51) Int. Cl.: B29C 70/54, B29C 31/08, B29C 51/46

(54) **DISPOSITIF ET PROCÉDÉ POUR L'ESTAMPAGE D'UN FLAN COMPOSITE À MATRICE THERMOPLASTIQUE**
VORRICHTUNG UND VERFAHREN ZUM PRÄGEN EINES THERMOPLASTISCHEN MATRIX-VERBUNDZUSCHNITTS
APPARATUS AND METHOD FOR STAMPING A COMPOSITE BLANK OF THERMOPLASTIC MATRIX

(30) Priorité: 15.03.2024 FR 2402638
(43) Date de publication de la demande: 17.09.2025
(73) Titulaire: Daher Aerospace, 94310 Orly (FR)
(72) Inventeur: ZAWADKA, Laurent, 44680 Sainte Pazanne (FR)
(74) Mandataire: Hamann, Jean-Christophe

(56) Documents cités:
- EP-B1- 2 911 866
- CN-U- 208 714 531
- DE-A1- 102014 208 705
- KR-B1- 100 388 135

## Description

### Domaine technique

L'invention appartient au domaine de la mise en œuvre des matériaux composites à matrice polymère thermoplastique.

Plus particulièrement, l'invention appartient au domaine de la mise en forme par estampage dans laquelle un flan sous la forme d'une plaque composite consolidée renforcée par des fibres est mis en forme par déformation entre un poinçon et une matrice appairés.

### Technique antérieure

L'estampage est une technique de mise en forme des matériaux composites à matrice thermoplastique qui permet d'obtenir à partir d'un flan une forme tridimensionnelle non développable.

Plus particulièrement lorsque le flan composite est renforcé par des fibres continues sous la forme d'une stratification de plis, notamment des fibres constituées d'un matériau ne présentant pas plasticité telles que des fibres de carbone ou de verre, la déformation du flan au cours de l'estampage afin que celui-ci épouse les formes du poinçon et de la matrice, se réalise notamment par des glissements interlaminaires.

À cette fin le flan consolidé ou semi-consolidé, c'est-à-dire rigide, est chauffé à une température de l'ordre de la température de fusion de la matrice polymère thermoplastique avant estampage, de sorte à permettre ce mode de déformation.

Le flan qui se trouve alors dans un état déconsolidé, est soumis à l'estampage et est reconsolidé en forme à la fin de cet estampage.

Avant estampage et au cours du chauffage, le flan est porté par un cadre de transfert tel que décrit dans le document EP 3 065 931 ou dans la demande de brevet européen co-pendante EP2023201473, cadre qui permet également le positionnement précis du flan par rapport à l'outillage d'estampage. CN208714531U concerne un système d'estampage.

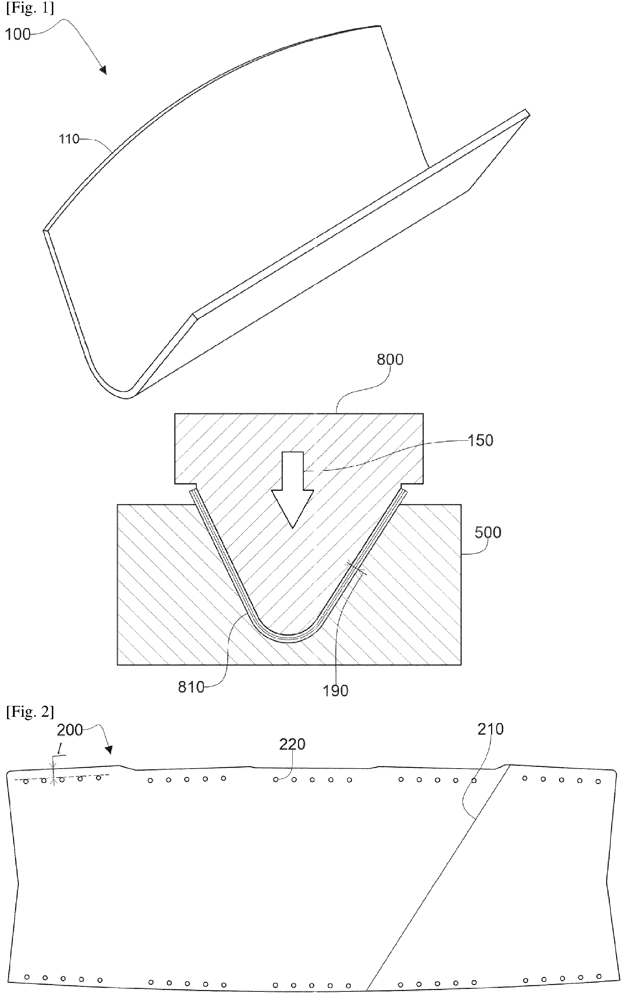

Ces techniques de l'art antérieur donnent satisfaction toutefois lorsque la pièce finale (100) comporte une partie courbée (110) comme le montre la [Fig.1] et que le formage de cette partie implique un rétreint de la matière, des fronces peuvent se former, ce qui, dans la pièce finale, se traduit par des ondulations, parfois fortes, des plis, voire des essorages de la matrice polymère entre les plis.

Le phénomène d'apparition de fronces dans les parties en rétreint lors d'un estampage est essentiellement géométrique, mais dans le cas d'un flan composite renforcé par des fibres continues ne présentant pas de plasticité, ce phénomène tend à se propager sur l'ensemble de la pièce, y compris dans des zones non rétreintes.

Outre l'écart de forme, ces défauts abaissent considérablement les qualités mécaniques de la pièce et rendent celle-ci impropre à son usage, la pièce est alors rebutée et n'est tout simplement pas réalisable par les techniques de l'art antérieur.

### Résumé de l'invention

L'invention vise à résoudre les insuffisances de l'art antérieur et concerne à cette fin un système d'estampage comprenant :
un flan détouré comprenant des fibres de renforts dans une matrice polymère thermoplastique ;
un cadre de transfert apte à supporter le flan le long d'au moins deux bordures dudit flan et comprenant une zone ouverte entre ces au moins deux bordures ;
un dispositif d'estampage comprenant une matrice d'estampage et un poinçon mobile verticalement par rapport à la matrice d'estampage selon une position ouverte et une position fermée, la position fermée définissant un entrefer entre des parois de la matrice d'estampage et des parois du poinçon ;
des moyens pour déplacer le cadre de transfert au-dessus de la matrice d'estampage et entre une position haute et une position basse relativement à la matrice ;
système dans lequel :
   le cadre de transfert comprend une pluralité de d'éléments de maintien répartis sur les au moins deux bordures, chaque élément de maintien étant apte à immobiliser relativement à lui même une partie du flan ;
   chaque élément de maintien de la pluralité comprend un alésage de centrage apte à coopérer avec un axe de centrage d'un élément récepteur de la matrice d'estampage ;
   la matrice d'estampage comprend une pluralité d'éléments récepteurs aptes à coopérer avec la pluralité d'éléments de maintien de sorte à connecter chaque élément de maintien avec chaque élément récepteur par les moyens de centrage lorsque le cadre de transfert passe de la position haute à la position basse ;
   chaque élément récepteur étant lié à la matrice d'estampage par une liaison pivot d'axe horizontal ; et
   l'élément récepteur comprend un moyen guidage en translation de sorte que l'élément de maintien étant connecté à l'élément récepteur l'élément de maintien est guidé en translation relativement audit élément récepteur dans un plan parallèle à l'axe de la liaison pivot et selon une direction perpendiculaire à l'axe de la liaison pivot.

Ainsi, les éléments de maintien étant connectés aux éléments récepteurs, ceux-ci, tout en accompagnant le flan dans son formage, exercent sur le flan une tension lors de l'estampage évitant ainsi la formation de fronces.

L'invention peut être mise en œuvre selon les modes de réalisation exposés ci-après lesquels sont à considérer individuellement ou selon toute combinaison techniquement opérante.

Selon un mode de réalisation, un élément de maintien est une pince.

Avantageusement, un élément de maintien comprend des griffes aptes à s'insérer dans des trous pratiqués sur les au moins deux bordures du flan.

Avantageusement, l'élément de maintien comprend un capot de protection thermique recouvrant une zone dans laquelle se trouvent les griffes.

Ainsi la partie du flan se trouvant dans la pince n'est pas déconsolidée lors du chauffage du flan, assurant ainsi un maintien ferme du flan dans cette zone durant le chauffage et durant l'estampage.

Avantageusement, la liaison pivot d'axe horizontal comprend un dispositif indexage dans une position apte à une réception de l'élément de maintien lorsque le cadre de transfert passe de la position haute à la position basse.

Selon un mode de réalisation, le dispositif d'indexage comprend un réglage d'un couple de désindexation autour de l'axe de la liaison pivot.

Avantageusement, un élément récepteur comprend un ressort apte à opposer un effort au déplacement d'un élément de maintien selon le guidage en translation de l'élément récepteur.

Avantageusement, le guidage en translation comprend un roulement. Celui-ci permet d'encaisser les efforts latéraux correspondant à la mise en tension du flan et ainsi d'assurer l'absence de coincement du mouvement de translation des éléments de maintien relativement aux éléments de réception en présence de ces efforts.

Selon un mode de réalisation le système comprend des moyens pour un contrôle d'un couple de basculement de l'élément récepteur autour de la liaison pivot au cours de l'estampage. Ce mode de réalisation permet à la fois un contrôle plus fin de la tension dans le flan et la gestion des risques de collision entre les éléments de maintien et le poinçon au cours d'un estampage.

Avantageusement, les moyens pour le contrôle du couple de basculement comprennent des moyens pour appliquer un programme de contrôle du couple de basculement en fonction d'un paramètre mesuré au cours de l'estampage, choisi parmi un déplacement du poinçon et un effort appliqué au poinçon.

Selon des modes de réalisation, les fibres de renfort sont sélectionnées parmi des fibres continues, des fibres longues et des fibres courtes.

### Brève description des dessins

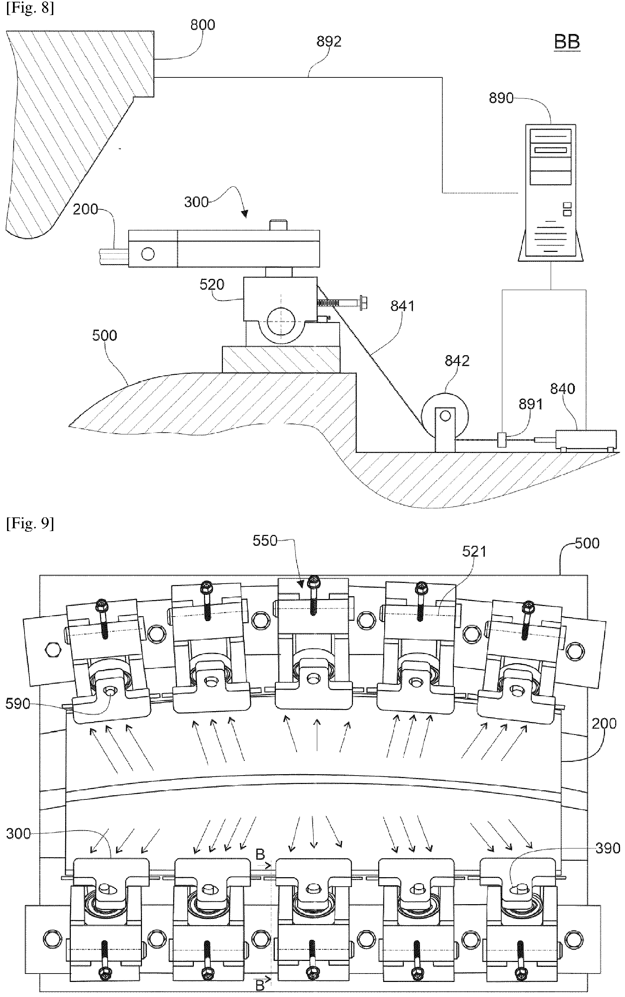

L'invention peut être mise en œuvre selon les modes de réalisation préférés, nullement limitatifs, exposés ci-après en référence à [Fig.1] à [Fig.9] dans lesquelles :
**Fig.1**
   [Fig.1] montre en perspective un exemple de pièce réalisée au moyen du dispositif et en coupe un schéma de principe d'une opération d'estampage ;
**Fig.2**
   [Fig.2] montre en vue de dessus un exemple de réalisation d'un flan composite pour la réalisation de la pièce de [Fig.1] ;
**Fig.3**

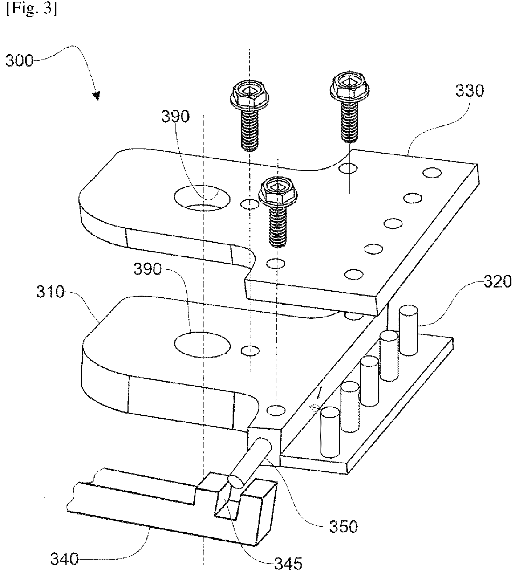

   [Fig.3] est une vue partielle en perspective et en éclaté d'un exemple de réalisation d'un élément de maintien du dispositif ;
**Fig.4**

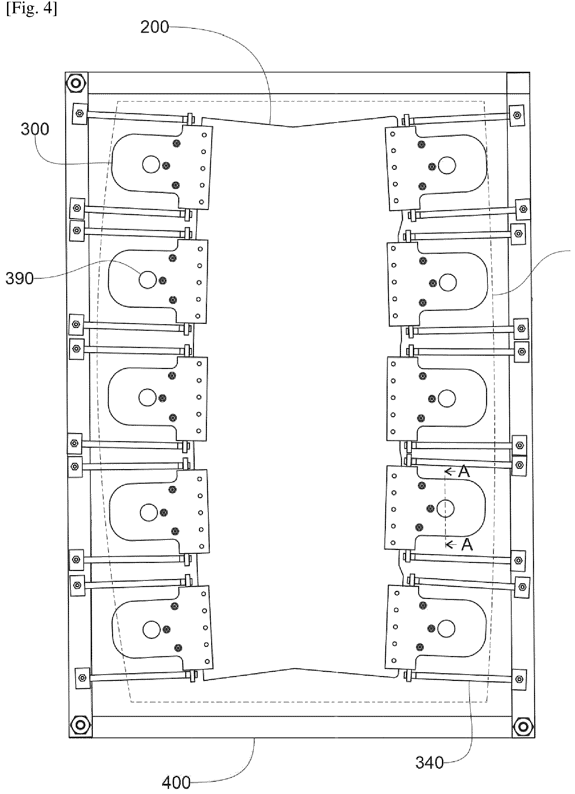

   [Fig.4] montre en vue de dessus un exemple de réalisation d'un cadre de transfert pour soutenir le flan de [Fig.2] et mettant en œuvre des éléments de maintien de [Fig.3];
**Fig.5**

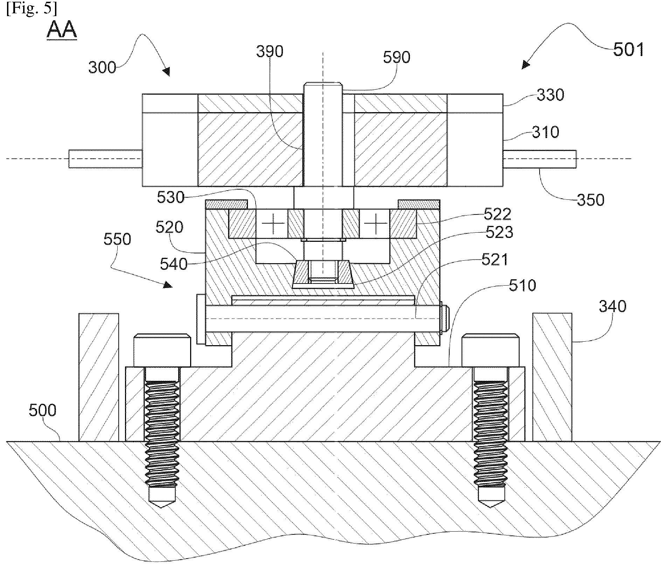

   [Fig.5] est une vue en coupe AA définie [Fig.4] montrant un exemple de réalisation d'un élément de retenue comprenant un élément de maintien et un élément récepteur ;
**Fig.6**

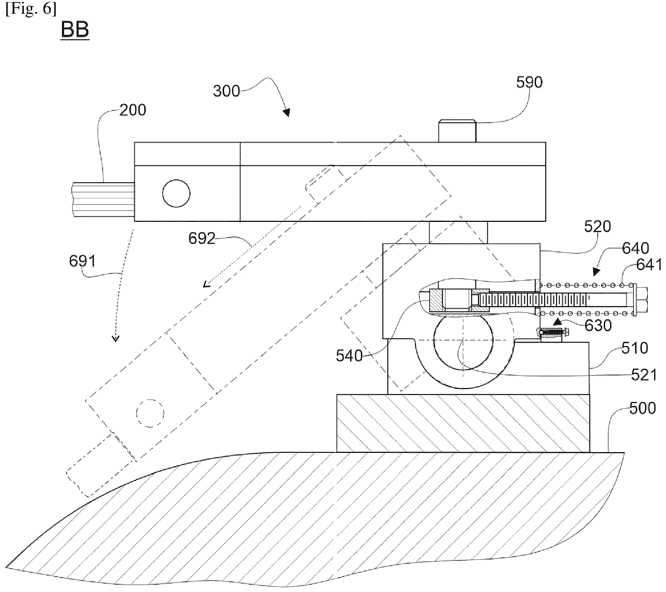

   [Fig.6] montre selon une vue partielle en coupe BB définie [Fig.9], un exemple de réalisation d'un élément de retenue comprenant un élément de maintien et d'un élément récepteur ;
**Fig.7**

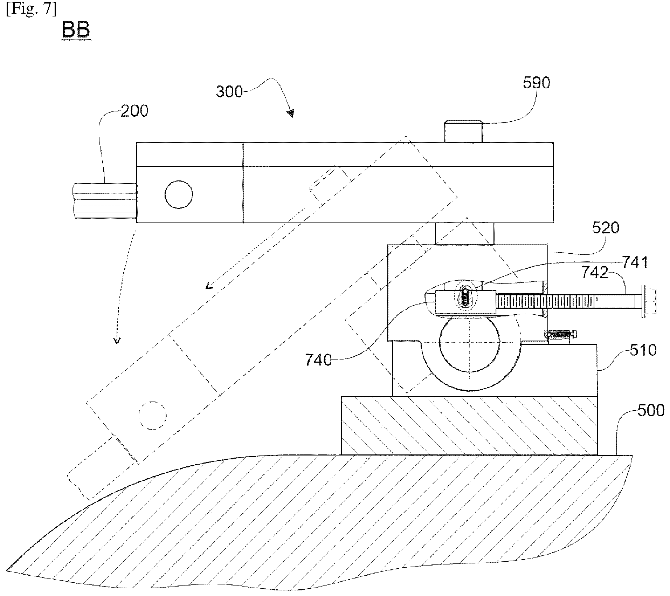

   [Fig.7] montre selon une vue partielle en coupe BB un autre exemple de réalisation d'un élément de retenue ;
**Fig.8**
   [Fig.8] montre selon une vue partielle en coupe BB un autre exemple de réalisation d'un élément de retenue comprenant des moyens de réglage d'un couple de basculement d'une partie supérieure de guidage ;
**Fig.9**
   [Fig.9] est une vue de dessus d'une matrice d'estampage comprenant une pluralité d'éléments de retenue, le flan formé après estampage, elle représente également les efforts exercés par les éléments de maintien sur le flan en cours d'estampage.

Afin de faciliter la lecture, toutes les pièces ne sont pas représentées d'une figure à l'autre.

### Description des modes de réalisation

[Fig.1] le principe de l'estampage consiste à mettre en forme un flan initialement plan par son formage entre une matrice d'estampage (500) comprenant une empreinte (810) et un poinçon appairé (800) dont la forme extérieure est distante de la forme de l'empreinte d'un entrefer (190) correspondant à l'épaisseur de la pièce finie.

Ce formage est réalisé par un mouvement relatif de rapprochement (150) du poinçon (800) et de la matrice d'estampage (500).

Dans tout le texte les notions de vertical ou horizontal sont relatives et données en rapport avec le mouvement d'estampage relatif du poinçon par rapport à la matrice d'estampage de l'outillage. Lorsque l'outillage est monté sur une presse, ce mouvement s'effectue dans la plupart des cas selon une direction verticale.

La personne du métier comprend que cette direction de déplacement relatif du poinçon par rapport à la matrice peut s'effectuer, sur d'autres machines de mise en œuvre, selon d'autres directions, notamment horizontale, sans modifier le fonctionnement du système. Ainsi, la direction verticale est par convention la direction du mouvement du poinçon, imposée par la presse, lors de l'estampage.

[Fig.2] selon un exemple de réalisation la pièce représentée [Fig.1] est obtenue par l'estampage d'un flan (200) plat constitué d'un composite stratifié dont la matrice est constituée d'un polymère thermoplastique renforcé par des plis de fibres continues (210) c'est-à-dire qui s'étendent d'un bord à l'autre du flan.

Selon les exemples de réalisation le flan (200) est découpé par jet d'eau abrasif ou par outil coupant, dans une plaque consolidée, obtenue par un procédé tel que décrit dans le document EP 2 819 823, ou, est partiellement consolidé, obtenu par drapage de plis pré-imprégnés ou par placement de fibres selon le procédé décrit dans les documents EP 3 096 940 ou US 2018/0319102.

Selon des modes de réalisation non limitatifs et plus particulièrement pour des applications aéronautiques, le polymère thermoplastique constituant la matrice est choisi parmi PEI, PPS, PEEK, PEK, PEKK ou LMPAEK^{®}, avec :
PEI : polyétherimide,
PPS : poly(sulfure de phénylène),
PEEK : polyétheréthercétone,
PEK : polyéthercétone,
PEKK : polyéthercétonecétone, et
LMPAEK^{®} : « Low Melting PolyArylEtherKetone », nom commercial d'un polyarylétercétone à basse température de fusion distribué par VICTREX PLC Ctrex Technology Centre Hillhouse International, Thornton FY5 4QD, Royaume Uni.

Selon des exemples non limitatifs, le renfort fibreux est constitué de fibres de carbone, verre, aramide (kevlar^{®}) sous forme de tissu, de non-tissé, de nappe unidirectionnelle ou est déposé par placement automatique de fibres.

Quel que soit le mode de réalisation, le flan est rigide à température ambiante et doit être porté à une température proche et en général légèrement supérieure à la température de fusion de la matrice polymère afin de permettre l'estampage.

Ce chauffage est avantageusement réalisé par le passage du flan, supporté sur un cadre de transfert, sous des panneaux rayonnants. Selon un exemple de réalisation le cadre de transfert peut permettre en outre de réaliser un chauffage sur les deux faces du flan.

Selon un exemple réalisation, le flan comprend une pluralité de perçages (220) d'un diamètre compris entre 2 mm et 5 mm selon l'épaisseur du flan et répartis sur au moins deux bordures opposées du flan.

Le bord des perçages se situe à une distance *l* du bord du flan, avec *l* au moins égale à l'épaisseur du flan.

[Fig.3] les perçages en bordure de flan sont configurés pour coopérer avec des éléments de maintien (300).

Chaque élément de maintien comprend une base (310), laquelle, selon cet exemple de réalisation, peut comprendre une pluralité de griffes (320) aptes à s'insérer dans les perçages en bordure de flan. Cependant pour certaines applications, les éléments de maintien peuvent être des pinces sans griffes.

Une plaquette (330) assemblée à la base et qui recouvre, lorsqu'elle est assemblée avec la base la partie de bordure du flan au voisinage des perçages dans lesquels sont insérées les griffes (320).

Chaque élément de maintien (300) repose sur deux bras (340), par exemple par l'intermédiaire de pinoches (350) s'étendant de part et d'autre de la base (310) et s'insérant chacune dans une encoche ouverte (345) à l'extrémité de chaque bras (340).

[Fig.4] les bras (340) sont liés au cadre de transfert (400) à leur extrémité opposée à celle de l'encoche (345).

La position et l'orientation des bras (340) par rapport au cadre de transfert (400) sont réglables.

[Fig.3], la base (310), la plaquette (330), les griffes (320) et les bras (340) sont par exemple réalisés en acier, par exemple un acier à faible coefficient de dilatation thermique de type INVAR^{®}, de sorte à minimiser les contraintes de dilatation différentielle avec le flan lors du chauffage de ce dernier.

Outre le maintien en position du flan, la plaquette (330) a un rôle de protection thermique et permet, lors du chauffage du flan, de limiter la température de la zone du flan située sous la plaquette de sorte que cette zone puisse assurer le maintien et la tension du flan au cours de l'estampage.

Ainsi, pour permettre le glissement interlaminaire lors de l'estampage le flan doit être porté dans sa quasi-totalité à une température Tf + 30° à Tf + 50° où Tf est la température de fusion du polymère thermoplastique constituant la matrice du flan composite. La partie en bordure de flan et prise dans les éléments de maintien sur une distance *l* entre les griffes (320) et le bord du flan, doit être portée à une température de l'ordre ou légèrement inférieure (entre Tf - 20° et Tf + 5°) à la température de fusion du polymère, de sorte à permettre le maintien de ces parties au cours de l'estampage.

[Fig.4] le flan (200) installé sur le cadre de transfert (400) et rendu solidaire de celui-ci par les éléments de maintien (300) et les bras (340), est véhiculé par un mécanisme de transfert (non représenté) sous des panneaux radians pendant un temps suffisant pour son chauffage à une température supérieure à la température de fusion de la matrice polymère pendant un temps suffisant pour assurer la déconsolidation du flan.

Le cadre de transfert (400) portant le flan déconsolidé est alors placé entre la matrice d'estampage et le poinçon, c'est-à-dire dans une position haute au-dessus de la matrice d'estampage dans une presse verticale.

Le cadre de transfert (400) comprend une ouverture telle que celle-ci englobe un périmètre extérieur (410) de la matrice d'estampage. Ainsi, selon l'exemple d'une presse verticale, partant de la position haute, le cadre de transfert (400) portant le flan déconsolidé peut être descendu dans une position basse selon un mouvement vertical vers la matrice d'estampage.

[Fig.3] les éléments de maintien (300) comprennent un dispositif de centrage et de positionnement configuré pour coopérer avec un dispositif de maintien et de positionnement porté par la matrice d'estampage. Selon un exemple de réalisation ce dispositif comprend, côté élément de maintien, un alésage de centrage (390) traversant la base (310) et la plaquette en dehors de la zone de préhension du flan.

Selon des variantes de réalisation cet alésage de centrage (390) peut être cylindrique ou conique.

[Fig.5] lorsque le cadre de transfert se trouve en position basse, les pinoches (350) des éléments de maintien (300) sont libérées des bras (340). En face de chaque élément de maintien (300) la matrice d'estampage (500) comprend un élément récepteur (550) fixé à ladite matrice d'estampage.

Chaque élément récepteur (550) comprend un axe de centrage (590) sensiblement vertical selon cet exemple de réalisation, configuré pour s'insérer dans l'alésage de centrage (390) de l'élément de maintien (300), de sorte que lorsque le cadre de transfert passe de la position haute à la position basse, ledit axe de centrage (590) s'insère dans ledit alésage de centrage (390).

L'ensemble comprenant un élément de maintien lié à un axe de centrage (590) d'un élément récepteur (550) constitue un élément de retenue (501).

L'élément de maintien est ainsi apte à pivoter autour de l'axe de centrage (590). Selon un mode de réalisation particulier, tel que représenté [Fig.5], pour un ou plusieurs éléments de maintien (300), l'alésage de centrage (390) peut être un alésage oblong qui permet, lors de l'estampage du flan un débattement latéral limité de l'élément de maintien (300) relativement à l'axe de centrage (590) en plus du pivotement.

Selon un exemple de réalisation, l'élément de récepteur (550) comprend une base (510) fixée à la matrice d'estampage (500) et une partie supérieure de guidage (520) liée à la base (510) par une liaison pivot autour d'un axe horizontal (521) et sensiblement parallèle à la bordure du flan dans la partie de celui-ci prise par l'élément de maintien (300).

La partie supérieure de guidage (520) comprend des moyens de guidage en translation de l'axe de centrage (590) sous la forme de rainures (522, 523) s'étendant selon une direction sensiblement perpendiculaire à l'axe (521) de la liaison pivot entre la partie supérieure de guidage (520) et la base (510) de l'élément récepteur.

Selon cet exemple de réalisation, l'axe de centrage (590) est guidé dans une rainure supérieure (522) par un roulement à billes (530) dont le rôle est essentiellement d'encaisser les efforts latéraux au cours de l'estampage du flan et dans une rainure inférieure (523) par un lardon (540).

Selon un autre mode de réalisation, [Fig.7], le lardon (740) ne guide pas l'axe de centrage et ne réalise qu'un positionnement initial de celui-ci, avant l'estampage, via un mécanisme d'indexage (741), assurant ainsi un positionnement de l'axe de centrage (590) et son alignement avec l'alésage de centrage (390) lors de la descente du cadre de transfert sur la matrice d'estampage. Une vis (742) peut permettre de régler la position initiale du lardon (740) et de l'axe de centrage (590).

[Fig.6] selon un exemple de réalisation, l'élément récepteur peut comprendre un mécanisme d'indexage (630) qui maintient la partie supérieure de guidage (520) dans une configuration telle que l'axe de centrage (590) est vertical. Selon une variante avantageuse, le couple pour lequel la partie supérieure de guidage (520) se désindexe par sa rotation autour de l'axe (521) de sa liaison pivot avec la base (510) est réglable.

Selon un principe similaire, dans l'exemple de réalisation [Fig.7] le mécanisme d'indexage (741) peut être taré de sorte à libérer l'axe de centrage en translation pour une force donnée.

Ainsi, lors du déplacement du cadre de transfert de la position haute à la position basse et avant l'opération d'estampage les axes de centrage (590) des éléments récepteurs sont insérés dans les alésages correspondant des éléments de maintien (300) et les éléments de maintien reposant sur les éléments récepteurs sont sensiblement horizontaux.

Pour réaliser l'estampage, le poinçon est rapproché de la matrice d'estampage (500) dans un mouvement selon la direction verticale et ce faisant, exerce une pression de formage sur le flan le forçant à épouser une forme de l'empreinte dans la matrice d'estampage (500).

Sous l'effet de cette action de formage sur le flan, les parties supérieures de guidage (520) des éléments récepteurs se désindexent et basculent (691) autour de leur liaison pivot avec leurs bases (510), accompagnant la déformation du flan.

De manière similaire, dans le mode de réalisation [Fig.7] l'axe de centrage (590) se désindexe du lardon (740) autorisant le glissement relatif de l'élément de maintien (300) relativement à la partie supérieure de guidage (520).

Les parties du flan (200) se trouvant dans les éléments de maintien (300) restent fermement maintenues.

À mesure que le formage progresse, l'axe de centrage (590) et l'élément de maintien (300) coulissent (692) relativement à la partie supérieure de guidage (520) guidés en translation par le roulement à billes et le lardon (540) dans leurs rainures respectives.

Selon un exemple de réalisation, le dispositif peut comprendre un réglage (640) de la force opposée à ce coulissement par exemple au moyen d'un ressort.

[Fig.8] selon un exemple de réalisation, compatible avec les précédents, le dispositif peut comprendre des moyens de contrôle ou de pilotage du couple de basculement de la partie supérieure de guidage (520).

Selon un mode de réalisation, ces moyens de contrôle comprennent un tendeur (840) apte à appliquer une tension sur un lien (841) tel un câble ou une chaîne, connecté à une partie supérieure de guidage (520) d'un élément de retenue, via un système de poulies (842).

Selon des variantes, le tendeur est par exemple un ressort taré, ou selon un autre mode de réalisation, le tendeur est un actionneur tel qu'un vérin électrique ou un vérin à chaîne, piloté par un moyen informatique de sorte à appliquer une tension définie dans le lien (841), tension mesurée par un capteur d'effort (891) et pilotée selon un programme en fonction d'une information (892) relative à la position verticale ou à l'effort appliqué sur le poinçon (800).

Un tel moyen de contrôle peut agir sur tout ou partie des éléments de retenue selon le même profil de pilotage ou selon des profils de pilotage d'effort différents selon l'élément de retenue considéré.

Ces profils de pilotage peuvent être déterminés par des simulations et / ou des essais préalables à la mise en production du dispositif d'estampage.

En outre, ces moyens de contrôle permettent aussi d'éviter toute collision entre le poinçon (800) et les éléments de maintien (300) au cours d'un estampage.

[Fig.9] les distances entre les éléments de maintien (300) accrochés à leurs éléments récepteurs (550) sont sensiblement fixes au cours de l'estampage.

Selon une première variante, préférée, les alésages de centrage (390) sont cylindriques et n'autorisent qu'un débattement angulaire des éléments de maintien (300) autour de l'axe de centrage (590), éléments de maintien qui s'alignent avec la tension provoquée dans le flan (200).

Selon une autre variante, l'alésage de centrage (390) d'au moins un des éléments de maintien (300) est oblong, et autorise ainsi, en plus de l'alignement angulaire, un débattement latéral limité en translation des éléments de maintien présentant cet aménagement.

Quelle que soit la variante, ces dispositifs assurent à la fois un accompagnement du flan (200) durant sa déformation évitant ainsi toute déchirure ou blocage, tout en exerçant durant l'estampage des tensions sur le flan, tensions symbolisées par les flèches représentées [Fig.9], évitant ainsi la formation de fronces.

L'application de ces tensions, variables au cours du processus d'estampage, est réglée, le cas échéant individuellement pour chaque élément de retenue, par au moins un paramètre parmi :
la position de l'élément récepteur (550) relativement à l'empreinte de formage dans la matrice d'estampage ;
le couple de désindexation de la partie de guidage en translation de l'élément récepteur relativement à sa base ;
l'effort opposé à la translation de l'axe de centrage dans la partie de guidage en translation de l'élément récepteur ;
les moyens de contrôle du couple de basculement de la partie supérieure de guidage ; et
la forme de l'alésage de centrage (390) de l'élément de maintien : cylindrique ou oblong et le jeu latéral maximum autorisé de l'axe de centrage (590) dans cet alésage de centrage.

Ces réglages, ainsi que le nombre d'éléments de retenue à considérer pour un formage donné, sont déterminés par l'expérience, par des essais préliminaires et avec l'aide de simulations numériques du formage si besoin. Une fois ces réglages déterminés, ils restent constants pour toute la série de pièces réalisées.

Bien que le dispositif exposé ci-avant soit particulièrement adapté au formage par estampage d'un flan composite à matrice thermoplastique renforcé par des fibres continues, l'apparition de fronces lors du formage d'un flan dans une forme comprenant une zone en rétreint existe pour des flans composites d'autres natures notamment des composites thermoplastiques renforcés par des fibres longues (non continues) ou des fibres courtes, voire non renforcés ou renforcés par des fibres thermoplastiques présentant une certaine plasticité à la température de formage.

Le dispositif décrit ci-avant reste pertinent pour le formage par estampage de ces autres matériaux.

La description ci-avant et les exemples de réalisation montrent que le dispositif atteint le but visé, plus particulièrement il permet de mettre en tension un flan composite thermoplastique, notamment renforcé par des fibres continues sans aptitude à la déformation plastique telles que des fibres de carbone ou de verre, de sorte à éviter la formation de fronces dans un formage par estampage comprenant une zone en rétreint.

## Revendications

1. Système d'estampage comprenant :
un flan (200) détouré comprenant des fibres de renforts dans une matrice polymère thermoplastique ;
un cadre de transfert (400) apte à supporter le flan le long d'au moins deux bordures dudit flan et comprenant une zone ouverte entre ces au moins deux bordures ;
un dispositif d'estampage comprenant une matrice d'estampage (500) et un poinçon (800) mobile verticalement par rapport à la matrice d'estampage (500) selon une position ouverte et une position fermée, la position fermée définissant un entrefer (190) entre des parois de la matrice d'estampage et des parois du poinçon ;
des moyens pour déplacer le cadre de transfert au-dessus de la matrice d'estampage (500) et entre une position haute et une position basse relativement à la matrice d'estampage ;
**caractérisé en ce que** :
le cadre de transfert comprend une pluralité d'éléments de maintien (300) répartis sur les au moins deux bordures, chaque élément de maintien (300) étant apte à immobiliser relativement à lui-même une partie du flan (200) ;
chaque élément de maintien (300) de la pluralité comprend un alésage de centrage (390) apte à coopérer avec un axe de centrage (590) d'un élément récepteur (550) de la matrice d'estampage ;
la matrice d'estampage comprend une pluralité d'éléments récepteurs (550) aptes à coopérer avec la pluralité d'éléments de maintien (300) de sorte à connecter chaque élément de maintien avec chaque élément récepteur par des moyens de centrage (390, 590) lorsque le cadre de transfert (400) passe de la position haute à la position basse ;
chaque élément récepteur (550) étant lié à la matrice d'estampage par une liaison pivot d'axe horizontal (521) ; et
l'élément récepteur (550) comprend un moyen guidage en translation (520) de sorte que l'élément de maintien (300) étant connecté à l'élément récepteur (550) l'élément de maintien (300) est guidé en translation relativement audit élément récepteur (550) dans un plan parallèle à l'axe de la liaison pivot (521) et selon une direction perpendiculaire à l'axe de la liaison pivot (521).

2. Système selon la revendication 1, dans lequel un élément de maintien est une pince.

3. Système selon la revendication 1, un élément de maintien comprend des griffes (320) aptes à s'insérer dans des trous (220) pratiqués sur les au moins deux bordures du flan (200).

4. Système selon la revendication 3, dans lequel l'élément de maintien comprend un capot de protection thermique (330) recouvrant une zone dans laquelle se trouvent les griffes (320).

5. Système selon la revendication 1, dans lequel la liaison pivot d'axe horizontal comprend un dispositif indexage (630) dans une position apte à une réception de l'élément de maintien (300) lorsque le cadre de transfert (400) passe de la position haute à la position basse.

6. Système selon la revendication 5, dans lequel le dispositif d'indexage (630) comprend un réglage d'un couple de désindexation autour de l'axe (521) de la liaison pivot.

7. Système selon la revendication 1, dans lequel un élément récepteur (550) comprend un ressort (641) apte à opposer un effort au déplacement d'un élément de maintien (300) selon le guidage en translation de l'élément récepteur.

8. Système selon la revendication 1, dans lequel le guidage en translation comprend un roulement (530).

9. Système selon la revendication 1, comprenant des moyens (840, 841, 842) pour un contrôle d'un couple de basculement de l'élément récepteur (550) autour de la liaison pivot (521) au cours de l'estampage.

10. Système selon la revendication 9, dans lequel les moyens pour le contrôle du couple de basculement comprennent des moyens (890, 891, 892) pour appliquer un programme de contrôle du couple de basculement en fonction d'un paramètre mesuré au cours de l'estampage, choisi parmi un déplacement du poinçon (800) et un effort appliqué au poinçon.

11. Système selon la revendication 1, dans lequel les fibres de renfort sont sélectionnées parmi des fibres continues (210), des fibres longues et des fibres courtes.

## Patentansprüche

1. Ein Stanzsystem, umfassend:
einen gefrästen Verbundstanzrohling (200), der Verstärkungsfasern in einer thermoplastischen Polymermatrix umfasst;
einen Transferrahmen (400), der dazu ausgelegt ist, den Verbundstanzrohling (200) entlang mindestens zwei Kanten des Stanzrohlings zu stützen, und der einen offenen Bereich (411) innerhalb der mindestens zwei Kanten umfasst;
eine Stanzvorrichtung, die eine Stanzform (500) und einen beweglichen Stempel (800) umfasst, der relativ zur Stanzform (500) vertikal zwischen einer offenen Position und einer geschlossenen Position beweglich ist, wobei die geschlossene Position einen Luftspalt (190) zwischen den Wänden der Stanzform und den Wänden des beweglichen Stempels definiert;
Mittel zum Bewegen des Transferrahmens (400) über die Stanzform (500) und zwischen einer oberen Position und einer unteren Position relativ zur Stanzform;
**dadurch gekennzeichnet, dass**:
der Transferrahmen (400) eine Vielzahl von Halteelementen (300) umfasst, die entlang der mindestens zwei Kanten verteilt sind, wobei jedes Halteelement (300) dazu ausgelegt ist, einen Halteabschnitt des Rohlings (200) relativ zu sich selbst zu halten;
jedes Halteelement (300) der Vielzahl eine Zentrierbohrung (390, 391) umfasst, die so konfiguriert ist, dass sie mit einem Zentrierstift (590) eines Aufnahmeelements (550) der Stanzform (500) zusammenwirkt;
die Stanzform eine Vielzahl von Aufnahmeelementen (550) umfasst, die so konfiguriert sind, dass sie mit der Vielzahl von Halteelementen (300) zusammenwirken, um jedes Halteelement (300) über die Zentriermittel (390, 590) mit jedem Aufnahmeelement (500) zu verbinden, wenn sich der Transferrahmen (400) von der oberen Position in die untere Position bewegt;
jedes Aufnahmeelement (550) ist über ein Schwenkgelenk um eine horizontale Achse (521) mit der Stanzform (500) verbunden; und
das Aufnahmeelement (550) eine Translationsführungseinrichtung (520) umfasst, so dass, wenn das Halteelement (300) mit dem Aufnahmeelement (550) verbunden ist, das Halteelement (300) in einer Ebene parallel zur Achse (521) des Schwenkgelenks und in einer Richtung senkrecht zur Achse des Schwenkgelenks relativ zum Aufnahmeelement (550) translatorisch geführt wird.

2. Das System nach Anspruch 1, wobei ein Halteelement (300) eine Klemme ist.

3. Das System nach Anspruch 1, wobei ein Halteelement (300) Klauen (320) umfasst, die so konfiguriert sind, dass sie in Löcher (220) eingeführt werden können, die in die mindestens zwei Kanten des Rohlings (200) gebohrt sind.

4. System nach Anspruch 3, wobei das Halteelement (300) eine Wärmeschutzabdeckung (330) umfasst, die einen Bereich abdeckt, in dem sich die Klauen (320) befinden.

5. Das System nach Anspruch 1, wobei das Schwenkgelenk um die horizontale Achse einen ersten Indexierungsmechanismus (630) in einer Position umfasst, die so ausgelegt ist, dass sie das Halteelement (300) aufnimmt, wenn sich der Transferrahmen (400) von der oberen Position in die untere Position bewegt.

6. System nach Anspruch 5, wobei der Indexierungsmechanismus (630) eine Einstellung eines Deindexierungsdrehmoments um die Achse (521) des Schwenkglieds umfasst.

7. Das System nach Anspruch 1, wobei ein Aufnahmeelement (550) eine Feder (641) umfasst, die so konfiguriert ist, dass sie einer Kraft entgegenwirkt, die einer Verschiebung des Halteelements (300) gemäß der Führung in Translationsrichtung des Aufnahmeelements entgegenwirkt.

8. Das System nach Anspruch 1, wobei die Führung in Translationsrichtung ein Kugellager umfasst.

9. Das System nach Anspruch 1, umfassend Mittel (840, 841, 842) zum Steuern eines Kippmoments des Aufnahmeelements (550) um das Schwenkgelenk (521) während eines Stanzvorgangs.

10. System nach Anspruch 9, wobei die Mittel zum Steuern des Kippmoments Mittel (890, 891, 892) zum Ausführen eines Kippmoment-Steuerprogramms gemäß einem während des Stanzvorgangs gemessenen Parameter umfassen, der aus einer Verschiebung des Stempels und einer auf den Stempel ausgeübten Kraft ausgewählt wird.

11. System nach Anspruch 1, wobei die Verstärkungsfasern aus Endlosfasern (210), langen Fasern und kurzen Fasern ausgewählt sind.

## Claims

1. A stamping system comprising:
a routed composite stamping blank (200) comprising reinforcing fibers in a thermoplastic polymer matrix;
a transfer frame (400) adapted to support the composite stamping blank (200) along at least two edges of the stamping blank and comprising an open area (411) inside the at least two edges;
a stamping device comprising a stamping die (500) and a movable punch (800) vertically movable relative to the stamping die (500) between an open position and a closed position, the closed position defining an airgap (190) between walls of the stamping die and walls of the movable punch;
means for moving the transfer frame (400) above the stamping die (500) and between an upper position and a lower position relative to the stamping die;
**characterized in that**:
the transfer frame (400) comprises a plurality of holding members (300) distributed along the at least two edges, each holding member (300) being adapted to maintain relative to itself a holding portion of the blank (200);
each holding member (300) of the plurality comprising a centering bore hole (390, 391) configured to cooperate with a centering pin (590) of a receiving member (550) of the stamping die (500);
the stamping die comprises a plurality of receiving members (550) configured to cooperate with the plurality of holding members (300) so as to connect each holding member (300) with each receiving member (500) by way of the centering means (390, 590) when the transfer frame (400) moves from the upper position to the lower position;
each receiving member (550) being connected to the stamping die (500) by a pivot link about a horizontal axis (521); and
the receiving member (550) comprises a translation guiding means (520) such that when the holding member (300) is connected to the receiving member (550), the holding member (300) is guided in translation relative to the receiving member (550) in a plane parallel to the axis (521) of the pivot link and in a direction perpendicular to the axis of the pivot link.

2. The system of claim 1, wherein a holding member (300) is a clamp.

3. The system of claim 1, wherein a holding member (300) comprises claws (320) configured to be inserted into holes (220) drilled in the at least two edges of the blank (200).

4. The system of claim 3, wherein the holding member (300) comprises a thermal protection cover (330) covering an area in which the claws (320) are located.

5. The system of claim 1, wherein the pivot link about the horizontal axis comprises a first indexing mechanism (630) in a position adapted to receive the holding member (300) when the transfer frame (400) moves from the upper position to the lower position.

6. The system of claim 5, wherein the indexing mechanism (630) comprises an adjustment of a de-indexing torque about the axis (521) of the pivot link.

7. The system of claim 1, wherein a receiving member (550) comprises a spring (641) configured to oppose a force against a displacement in translation of the holding member (300) according to the guiding in translation of the receiving member.

8. The system of claim1, wherein the guiding in translation comprises a ball bearing.

9. The system of claim 1, comprising means (840, 841, 842) for controlling a tipping torque of the receiving member (550) about the pivot link (521) during a stamping.

10. The system of claim 9, wherein the means fot controlling the tipping torque comprises means (890, 891, 892) for implementing a tipping torque control program according to a parameter measured during stamping, selected among a displacement of the punch and a force applied to the punch.

11. The system of claim 1, in which the reinforcing fibers are selected among continuous fibers (210), long fibers and short fibers.
